# EUROPEAN PATENT APPLICATION

(11) **EP 2 420 828 A2**
(43) Date of publication of application: **22.02.2012**
(21) Application number: 11175532.8
(22) Date of filing: 27.07.2011
(51) Int. Cl.: G01N 31/12

(54) **High-temperature combustion instrument**

(30) Priority: 17.08.2010 TR 201006829
(71) Applicant: Terralab Laboratuvar Malzemeleri Sanayi Ve Ticaret A.S., 06531 Ankara (TR)
(72) Inventor: Atamer, Bulent, 06531 Ankara (TR); Bayram, Bilal, 06531 Ankara (TR)
(74) Representative: Cayli, Hülya

(57) **Abstract**

A combustion instrument (A) is developed, comprising a combustion chamber (6), a sample compartment (2), a heater unit (5), at least one waste gas tube (7) connected to the combustion chamber (6), a sampler outlet (9) connected to the combustion chamber, and a sampler apparatus (10) connected to the sampler outlet (9). A sample is burnt in the combustion chamber (6) and a part of released gases is isokinetically sampled by making use of the measurement apparatus (10). Thus, the amount of an analyte present in the gas released as a result of burning large amounts of samples can be measured by using a small amount of the gas. The use of said instrument (A) allows to perform accurate analyte measurements, without requiring the use of sensors having different measurement ranges for samples of differing amounts.

## Description

### Technical Field

The present invention relates to a high-temperature combustion instrument, in which a sample is burned under high temperatures and isokinetic sampling is conducted on the resulting released combustion gases.

### Prior Art

One of the techniques widely used for determining the amount of ingredients included in a substance is the high-temperature combustion technique. In the high-temperature combustion technique, some amount of a substance to be analyzed is sampled. This portion taken is called as the sample. Any components to be analyzed in the gases released as a result of burning a sample under high temperatures is called as the analyte. The amount of the analyte is determined by means of a sensor.

Various problems have been encountered in the instruments in which the high-temperature combustion method is implemented. One of these problems is the need towards those analyte sensors, which have different measurement ranges for analyzing samples of differing amounts. The sensors according to the prior art have restricted measurement ranges and thus, if a sensor employed does fail in providing a convenient measurement range for an expected amount of analyte, the analyte amount goes beyond the measurement ranges, so that errors are produced in the respective measurement.

One of the convenient solutions for avoiding such errors appears to be conducting an analysis on small amounts of samples with the use of sensors having a lower measurement range. However, since samples taken from heterogeneous substances do not represent the parent substance adequately, the analysis results of samples taken from such substances show a wide variation and give unreliable results. For this reason, a sample taken from soil-like highly-heterogeneous substances should be of a high amount to provide an errorless analysis.

The patent document JP 7098308 A, in which a high-temperature combustion device according to the prior art is described, makes mention on a combustion device, the inner section of the combustion chamber thereof being coated with stable zirconium and the heater electrode with platinum. A sample placed into the device is heated up to 950°C, such that the carbon present in the sample combines with oxygen in the medium to yield carbon monoxide and carbon dioxide. Thus, generated carbon compounds are measured for sample analysis. The device described in that patent document does not provide a solution for the aforesaid problem.

In the patent document US 5935519 A according to the prior art is disclosed a high-temperature combustion device employed for measuring the sulphur amount in sulphurcontaining samples. In said device, oxygen gas is supplied to a combustion chamber so that the combustion chamber is heated and combustion is performed accordingly. Then, any products generated as a result of the combustion process is transferred to a low-pressure medium, reacted in that medium with gaseous ozone, and the amount of sulphur is measured by a chemiluminescent method. Said device, however, does not provide a solution for analyzing samples of different amounts.

### Brief Description of Invention

The high-temperature combustion instrument developed according to the present invention comprises at least one sample compartment, at least one combustion chamber accommodating said sample compartment, at least one heater unit heating the combustion chamber, at least one waste gas tube connected to the combustion chamber, at least one sampler outlet connected to the combustion chamber, and at least one sampler apparatus connected to the sampler outlet and having a cross-sectional area, which is determined according to the amount of a sample to be analyzed.

The instrument according to the present invention allows to burn a sample under a high temperature. The gases released as a result of this combustion process is advanced within said combustion chamber and delivered to the sampler apparatus connected to a measurement outlet by means of the waste gas tube. With isokinetic sampling, some portion of the gas advanced within the combustion chamber, this portion being in line with the cross-sectional area of the sampling device, is passed through the apparatus, while the remaining portion thereof is preferably discharged out via the waste gas tube. In one embodiment, the instrument according to the present invention comprises at least one catalytic combustion chamber connected to the sampler apparatus. The isokinetically sampled gas is combusted again with a catalyst in the catalytic combustion chamber, so that any components of the gas remaining in an unburned state are burnt. The sampled gas outlet from the catalytic combustion chamber is passed to at least one conditioning unit and/or to at least one sensor unit, such that the amount of a certain analyte present in the gas sampled by the sensor unit is measured.

The instrument according to the present invention enables one to make the measurement of the amount of an analyte present in a gas released as a result of burning samples of varying amounts and/or heterogeneous samples, without needing different sensors having different measurement ranges. In place of sampling a small amount of a heterogeneous substance and burning it for measurement purposes according to the prior art, a larger sample is burnt and the measurement is conducted via isokinetic sampling according to this invention, and any errors encountered in measuring analytes of heterogeneous substances are avoided.

### Object of Invention

The object of the present invention is to develop a high-temperature combustion instrument involving isokinetic sampling.

Another object of the present invention is to develop a high-temperature combustion instrument, enabling one to measure the analytes of samples of differing amounts, without needing any sensors having different measurement ranges.

A further object of the present invention is to develop a high-temperature combustion instrument, enabling one to measure the analytes of heterogeneous substances in a correct and reliable manner.

Yet a further object of the present invention is to develop a high-temperature combustion instrument, ensuring the insulation of the combustion chamber from the exterior.

Still a further object of the present invention is to develop a high-temperature combustion instrument, comprising a drive mechanism providing the movement of the sample compartment in a controlled and constant speed.

Still another object of the present invention is to develop a high-temperature combustion instrument, ensuring a complete combustion of the content of an isokinetically-sampled gas in a catalytic combustion chamber.

Yet another object of the present invention is to develop a high-temperature combustion instrument, in which complete combustion is ensured.

### Description of Figures

Illustrative embodiments of the subject high-temperature combustion instrument are illustrated in annexed figures briefly described hereunder.
Figure 1 is a perspective illustration of an instrument developed according to the present invention.
Figure 2 is a side cross-sectional illustration of the instrument according to the present invention, while the sample compartment thereof is out of said instrument.
Figure 3 is a side cross-sectional illustration of the instrument according to the present invention, while the sample compartment thereof is within said instrument.
Figure 4 is a perspective illustration of a combustion chamber and measurement apparatus comprised by the instrument developed according to the present invention.

The parts in said figures are individually numbered as following.

| | |
|---|---|
| instrument | (A) |
| drive mechanism | (1) |
| sample compartment | (2) |
| covering | (2a) |
| inlet of combustion chamber | (3) |
| inlet of burner gas | (4, 4') |
| heater unit | (5, 5') |
| combustion chamber | (6) |
| waste gas tube | (7) |
| waste gas outlet | (8) |
| sampler outlet | (9) |
| sampler apparatus | (10) |
| catalytic combustion chamber | (11) |
| outlet of catalytic combustion chamber | (12) |

### Description of Invention

The high-temperature combustion instrument (A) according to the present invention enables one to burn large amounts and/or heterogeneous samples under higher temperatures and to perform isokinetic sampling from released gases for conducting the analysis of an analyte of the gas by means of a single sensor.

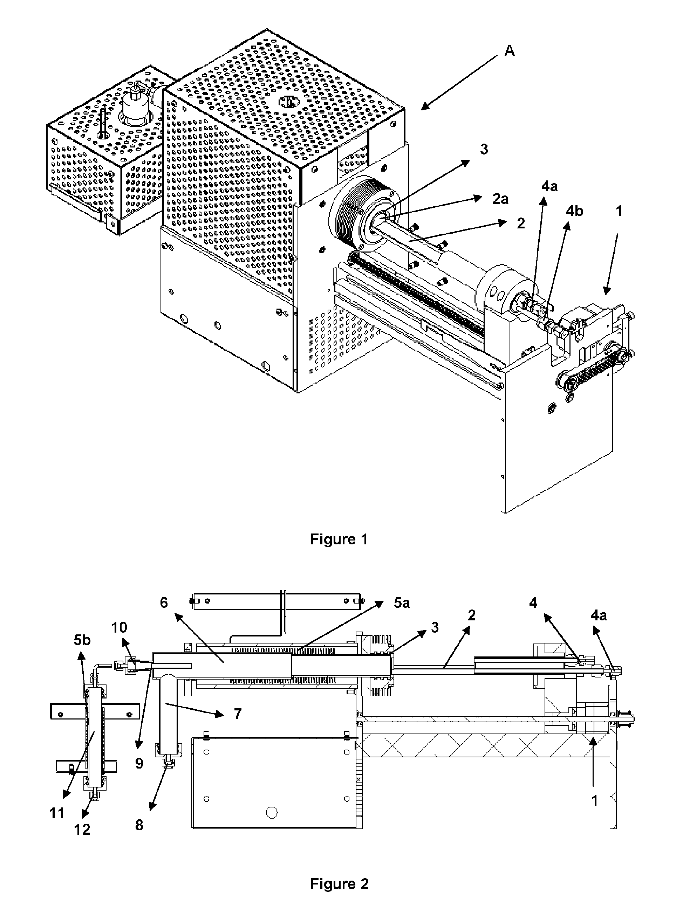

An illustration of the combustion instrument (A) according to the present invention is provided in Figure 1. The instrument (A) comprises at least one sample compartment (2) into which a sample to be burnt is placed. The sample compartment (2) is connected to the instrument (A) by means of a sliding-joint mechanism preferably. In one embodiment of the present invention, the sample compartment (2) is connected to a drive mechanism (1). Thus, the movement of the compartment (2) is controlled and kept at a constant speed.

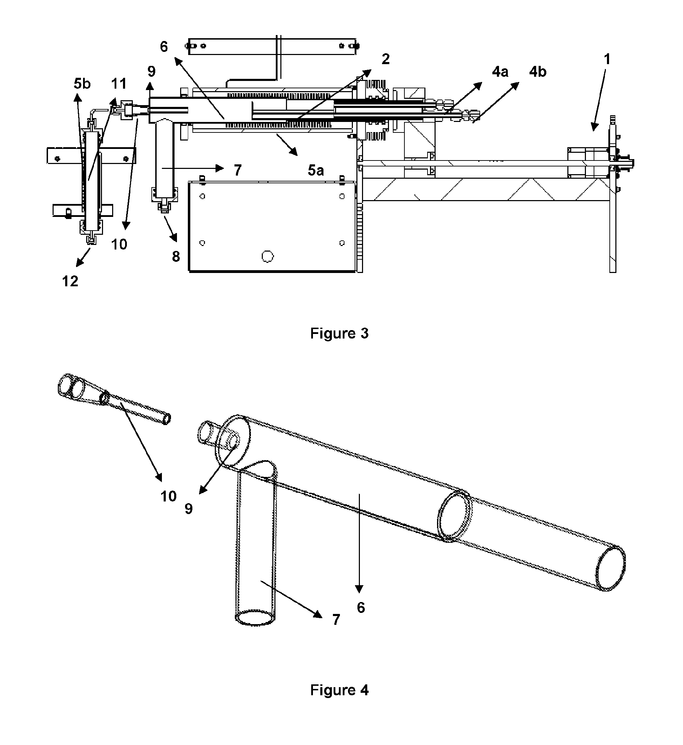

The instrument (A) comprises a combustion chamber (6) accommodating the sample compartment (2) (see figures 2 and 3). The combustion chamber (6) preferably has a circular cross-section. The combustion chamber (6) comprises a combustion chamber inlet (3), and the sample compartment (2) is introduced through this inlet (3) and placed into the chamber (6). At the end of the sample compartment (2) at the side of the combustion chamber inlet (3) is preferably provided a covering (2a). This covering (2a) preferably closes one end of the sample compartment (2) in a partial manner.

On the sample compartment (2) are provided burning gas inlets (4, 4'). The burning gas inlets (4, 4') provide the inlet of burning gases to be used in the combustion reaction of an analyzed sample into the instrument (A). Two burning gas inlets (4, 4') are provided in a representative embodiment of the present invention illustrated in the figures. The end of one (4) of these gas inlets (4, 4') is preferably opened into the interior of the sample compartment (2). The end of the other gas inlet (4'), in turn, is passed through the compartment (2) and the covering (2a) and opened into the combustion chamber (6). While the compartment (2) is placed into the chamber (6), burning gas is supplied particularly through the gas inlet (4') that opens into the combustion chamber (6). Thus, burning gas is supplied into the combustion chamber (6), rather than the ambiance, so that any ambient air entrance into the combustion chamber (6) is prevented. When the sample compartment (2) is completely placed into the combustion chamber (6), the gas inlet (4') opened into the combustion chamber (6) is closed and the gas inlet (4) is used that opens into the sample compartment (2). Thus, when the combustion reaction is initiated in the combustion chamber (6), the burning gas is completely guided onto the sample.

In a representative embodiment of the present invention, the cases in which the sample compartment (2) is within and out of the combustion chamber (6) are illustrated in figures 2 and 3, respectively. At least one heater unit (5) is provided in the instrument (A), in a manner situated close to the combustion chamber (6). The temperature of the combustion chamber (6) is increased by means of said heater unit and it is thus enabled to burn a sample taken into the combustion chamber (6) under higher temperatures.

Any gases released as a result of the combustion reaction conducted within the combustion chamber (6) are advanced within the combustion chamber (6) towards the other end thereof (6). At said end of the combustion chamber (6) is provided at least one waste gas tube (7) and at least one sampler outlet (9). The waste gas tube (7) is opened to the exterior of the instrument via a waste gas outlet (8).

The instrument (A) developed comprises a sampler apparatus (10). The combustion chamber (6) and one measurement apparatus (10) included in the instrument (A) according to the present invention are illustrated in Figure 4. The apparatus (10) is connected to the sampler outlet (9) preferably in a gastight manner against the ambiance. One part of the sampler apparatus (10) is extended into the interior of the combustion chamber (6). The sampler apparatus (10) allows to isokinetically sample the gases generated in the combustion chamber (6) as a result of a combustion process conducted therein. Isokinetic sampling is based on the principle that the amounts of gases flown under an identical average velocity in two telescoped tubes is directly proportional to the cross-sectional areas of the tubes. In the instrument (A) according to the present invention, the average velocities of gases flown in the combustion chamber (6) and in the sampler apparatus (10) are equalized. Thus, the gas present in the combustion chamber (6) is sampled proportionally to the cross-sectional area of the sampler apparatus (10) to provide an isokinetic sampling. By altering the cross-sectional area of the sampler apparatus (10), the isokinetic sampling amount is changed so that a wide range of analyte amounts can be measured with the instrument according to the present invention. Since the condition required for conducting isokinetic sampling is equalizing the average velocities of gases flown in the combustion chamber (6) and in the sampler apparatus (10), this velocity equalizing condition is satisfied by means of at least one suction device (not illustrated in figures) connected to the instrument (A).

By making use of this isokinetic sampling method, the analysis of an analyte of gases released as a result of burning a larger sample can be performed by means of a sensor having a lower measurement range.

In an exemplary embodiment of the instrument (A) illustrated in the figures, the sampler apparatus (10) has a circular cross-section and is situated so as to become concentric with the combustion chamber (6), which likewise has a circular cross-section. Based on the circular cross-sections of the combustion chamber (6) and of the measurement apparatus (10), as well as on said concentric positioning thereof, the gases are provided with a uniform flow in the combustion chamber (6) and in the measurement apparatus (10), and are homogeneously distributed therein. Another condition to be fulfilled to conduct a proper isokinetic sampling process is the provision of an adequate length for the combustion chamber (6). Particularly for gases released from the combustion of heterogeneous samples, a uniform distribution should be provided prior to sampling, and therefore, it becomes necessary to leave an adequate distance between the sample compartment (2) and the sampler apparatus (10).

The outlet of the sampler apparatus (10) is preferably connected to a catalytic combustion chamber (11) comprised by the instrument (A). The catalytic combustion chamber (11) is a combustion chamber that comprises at least one other heater unit (5'). In the catalytic combustion chamber (11), isokinetically-sampled gases are subjected to a second combustion process making use of a catalyst. Thus, any unburned components remaining in a sampled gas are burnt as well. The catalytic combustion unit (11) is opened to the exterior of the instrument (A) via a catalytic combustion unit outlet (12). This outlet (12) is connected to devices like conditioning, pressurizing-depressurizing, cooling, and flow-rate adjusting devices, etc. (not illustrated in figures). Thus, any required condition can be provided before an analyte of a sampled gas is analyzed. A sampled and preferably conditioned gas is then transferred to a sensor unit (not illustrated in figures) and the analyte amount in the gas is measured in the sensor unit. The measured value of an analyte amount in a sampled gas is multiplied with the ratio of the cross-sectional area of the combustion chamber (6) to the cross-sectional area of the measurement apparatus (10), so that the analyte amount present in the entirety of gas released as a result of burning the respective sample is obtained.

The instrument (A) according to the present invention enables one to burn samples of differing amounts and to make analyte measurements on released gases, without needing sensors having different measurement ranges. Thus, the necessity to make measurements by taking small samples from larger and/or heterogeneous substances is eliminated and more reliable and correct sample analyses can be performed as compared to those made with the instruments according to the prior art.

## Claims

1. A high-temperature combustion instrument (A) comprising at least one sample compartment (2) into which a sample to be burnt for sampling purposes is placed; at least one combustion chamber (6) accommodating said sample compartment (2); and at least one heater unit (5) heating the combustion chamber (6), **characterized by** further comprising
- at least one waste gas tube (7) connected to the combustion chamber (6),
- at least one sampler outlet (9) connected to the combustion chamber (6), and
- at least one sampler apparatus (10), having a cross-sectional area variable according to the amount of a sample and is attachable/detachable to/from the sampler outlet (9).

2. The high-temperature combustion instrument (A) according to Claim 1, **characterized by** comprising at least one burner gas inlet (4) with one end opened into sample compartment (2).

3. The high-temperature combustion instrument (A) according to Claim 1, **characterized in that** the sample compartment (2) comprises a covering (2a).

4. The high-temperature combustion instrument (A) according to Claim 3, **characterized by** comprising at least one other burner gas inlet (4'), with one end passed through within the sample compartment (2) and the covering (2a), and opened into the combustion chamber (6).

5. The high-temperature combustion instrument (A) according to Claim 1, **characterized by** comprising at least one catalytic combustion chamber (11), connected to the measurement apparatus (10) and comprising at least one heater unit (5').

6. The high-temperature combustion instrument (A) according to Claim 1, **characterized by** comprising at least one drive mechanism (1) to which the sample compartment (2) is connected.

7. The high-temperature combustion instrument (A) according to Claim 6, **characterized in that** said drive mechanism (1) is a mechanism (1) that moves the sample compartment (2) at a constant speed.

8. The high-temperature combustion instrument (A) according to Claim 1, **characterized in that** said waste gas tube (7) comprises at least one waste gas outlet (8).

9. The high-temperature combustion instrument (A) according to Claim 1, **characterized in that** the cross-section of the combustion chamber (6) is circular.

10. The high-temperature combustion instrument (A) according to Claim 1, **characterized in that** the cross-section of the sampler apparatus (10) is circular.

11. The high-temperature combustion instrument (A) according to Claim 9 or 10, **characterized in that** the sampler apparatus (10) and the combustion chamber (6) are positioned in a concentric manner.

12. The high-temperature combustion instrument (A) according to Claim 1, **characterized in that** the sampler apparatus (10) comprises a part that extends into the combustion chamber (6).
